# EUROPEAN PATENT SPECIFICATION

(11) **EP 2 849 334 B1**
(45) Date of publication and mention of the grant of the patent: **26.04.2017**
(21) Application number: 14175040.6
(22) Date of filing: 30.06.2014
(51) Int. Cl.: H02N 2/18

(54) **Energy harvesting system for an aircraft**
Energiegewinnungssystem für ein Flugzeug
Système de collecte d'énergie pour un avion

(30) Priority: 27.08.2013 US 201314011035
(43) Date of publication of application: 18.03.2015
(73) Proprietor: Goodrich Lighting Systems GmbH, 59557 Lippstadt (DE)
(72) Inventor: Bishop, JR., Benjamin Elmer, South Glastonbury, CT Connecticut 06073 (US); Hessling von Heimendahl, Andre, 56179 Koblenz (DE)
(74) Representative: Klunker . Schmitt-Nilson . Hirsch

(56) References cited:
- US-A1- 2006 061 107
- US-A1- 2008 230 653
- US-A1- 2010 176 692
- US-A1- 2012 205 491

## Description

### BACKGROUND OF THE INVENTION

Examples pertain to the art of motor vehicles and, more particularly, to an energy harvesting system for a motor vehicle.

Motor vehicles including land vehicles, water vehicles, and air vehicles include multiple electrical loads that are often powered by a battery. Oftentimes, the electrical loads are connected to the battery through long runs of electrical conductors or wires. As motor vehicles grow in complexity, the use of electrical components and, by extension, the need for more electrical conductors and connectors increases. The number of electrical conductors and connectors added to a motor vehicle represents a significant weight load that may impact performance. For example, the weight associated with the electrical conductors may have a negative impact on gas mileage for motor vehicles, or load maximums for air based vehicles. Also, the long runs of electrical conductors are exposed to harsh environments, including vibration, that could create open circuits that are hard to locate and repair.

### BRIEF DESCRIPTION OF THE INVENTION

The current invention is directed to an aircraft with an energy harvesting system according to the independent claim 1 and to a method of harvesting electrical energy according to the independent method claim 4. Disclosed is an energy harvesting system for an aircraft including an energy storage device, and an energy harvesting member electrically connected to the energy storage device and mechanically linked to the aircraft. The energy harvesting member is configured and disposed to generate an electrical energy output in response to one of a change in altitude of, or turbulence on, the aircraft.

Also disclosed is an aircraft including a body having an exterior surface and one or more interior surfaces, an energy storage device arranged in the body, and an energy harvesting member electrically connected to the energy storage device and mechanically linked to the body. The energy harvesting member is configured and disposed to generate an electrical energy output in response to one of a change in altitude of, or turbulence on, the body of the aircraft.

US 2012/205491 A1 discloses a passenger cabin emergency oxygen device for an aircraft, comprising at least one electrically driven activation device for activating the emergency oxygen device, at least one energy storage device and a source of electrical energy. Said source of electrical energy may be the aircraft energy system or an energy harvesting element. Such an energy harvesting element may be attached to a housing of the emergency oxygen device and adapted to convert mechanical energy acting onto such a housing from vibrations, accelerations into electrical energy.

According to US 2010/176692 A1 a stand-alone power generation device that provides power to an auxiliary system on an airborne platform includes a piezo-electric energy harvesting device and an energy storage unit, including a battery and a power conditioner. The device extracts energy generated by turbulent airflow around the platform and stores the energy to meet future power requirements.

US 2008/230653 A1 discloses an electrically controlled dimmable window for aircraft includes a controller and power that eliminates the need for wiring connections to on-board systems. Power for controlling the window is derived from an energy harvesting device that generates power by converting thermal gradients, motion/vibration or light energy present near the window. The integrated controller includes passenger controls for adjusting the opacity of the window, power conditioning circuitry, an electrical power storage device such as a battery, a processor and a radio receiver.

US 2006/061107 A1 describes methods and devices for efficiently extracting long-term energy from the external environment or the propulsion system of a vehicle in motion or operation are described. The vehicle can be in the form of a missile, aircraft, sensor-pod, space shuttle, ship, submarine, propeller, or other moving body. One embodiment includes a vehicle body that is in motion through a surrounding airstream. A portion of the surrounding airstream is harvested or captured through a fixed, movable, or variable geometry inlet that may be optionally under the control of an actuator and directed toward the high-pressure side of a turbine cavity. An internal turbine extracts energy from the high-pressure airstream as it flows toward the low-pressure turbine cavity from which it is finally directed toward one or more exhaust ports. As the turbine assembly rotates around the shaft this rotational energy is then used to drive an electrical generator assembly. A connector transfers at least some of the produced energy to an energy storage device and to a control system to at least partially operate at least some aspect of the vehicle.

Still further disclosed is a method of harvesting electrical energy in an aircraft. The method includes exposing an energy harvesting member mounted to a surface of the aircraft to one of a change in altitude or turbulence, generating an electrical energy in the energy harvesting member in response to the one of the change in altitude or turbulence, passing the electrical energy from the energy harvesting member to an electrical storage device, and storing the electrical energy in the electrical storage device.

Further examples of the energy harvesting system for an aircraft may include any of the following optional features, alone or in combination:
The energy harvesting member may comprise a pressure transducer mounted to one of the exterior surface and an interior surface of the aircraft, the pressure transducer being configured and disposed to generate an electrical energy in response to pressure fluctuations on the exterior surface created by the one of the change in altitude and turbulence.

The energy harvesting member may comprise a micro-turbine configured and disposed to generate an electrical energy in response to air passing between an interior surface and an exterior surface of the aircraft in response to the one of the change in altitude and turbulence.

The energy harvesting member may comprise a piezo-electric element mounted to one of the exterior surface and an interior surface of the aircraft, the piezo-electric element being configured and disposed to generate an electrical energy in response to dimensional changes in the one of the exterior surface and the interior surface in response to the one of the change in altitude and turbulence.

The energy storage device may comprise one of an ultracapacitor, a battery, a coiled spring, and a flywheel.

The energy harvesting system may further comprise: an electrical load operatively connected to the energy storage device.

Further examples of the method of harvesting electrical energy in an aircraft may include any of the following optional features, alone or in combination:
The step of exposing the energy harvesting member to environmental changes may include exposing the energy harvesting member to pressure changes resulting from the one of the change in altitude and turbulence.

The step of exposing the energy harvesting member to environmental changes may include exposing the energy harvesting member to dimensional changes of the surface resulting from the one of the change in altitude and turbulence.

The step of exposing the energy harvesting member to environmental changes may comprise driving a micro-turbine with air passing from one portion of the aircraft to another portion of the aircraft or to the exterior of the aircraft resulting from the one of the change in altitude and turbulence.

The step of passing the electrical energy to an energy storage device may comprise passing the electrical energy to one of an ultra capacitor, a battery, a spring and a flywheel.

The method may further comprise: passing the electrical energy to an electrical load.

### BRIEF DESCRIPTION OF THE DRAWINGS

The following descriptions should not be considered limiting in any way. With reference to the accompanying drawings, like elements are numbered alike:
FIG. 1 is a perspective view of an aircraft including an energy harvesting system.
FIG. 2 is a schematic view of the energy harvesting system of FIG. 1;
FIG. 3 is a schematic view of an energy harvesting system, and
FIG. 4 is a schematic view of an energy harvesting system.

### DETAILED DESCRIPTION OF THE INVENTION

A detailed description of the disclosed apparatus and method are presented herein by way of exemplification and not limitation with reference to the Figures.

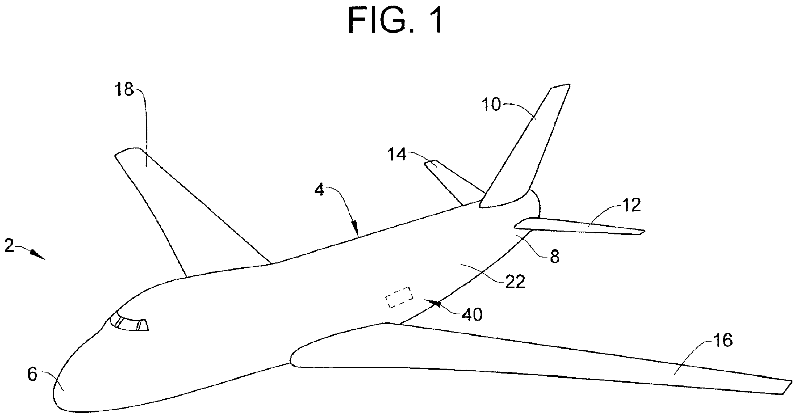

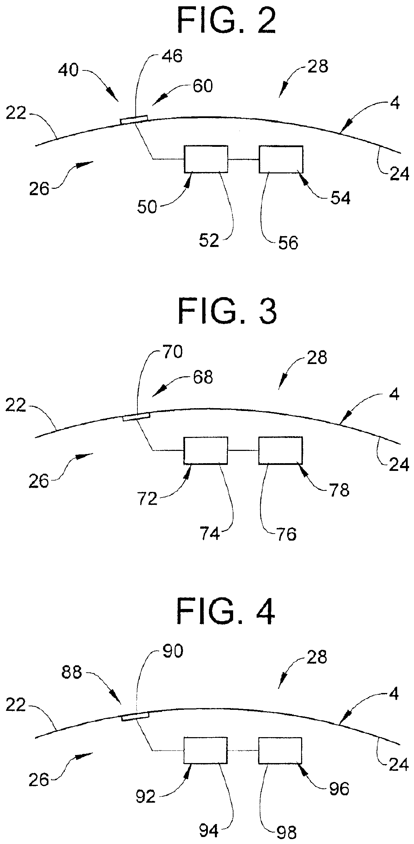

An aircraft is indicated generally at 2, in FIG. 1. Aircraft 2 includes a body 4 having a forward or nose portion 6 and an aft or tail portion 8. Tail portion 8 includes a vertical stabilizer 10, a first horizontal stabilizer 12, and a second horizontal stabilizer 14. Aircraft 2 also includes a first wing 16 extending from a port side (not separately labeled) of body 4 and a second wing 18 extending from a starboard side (also not separately labeled) of body 4. Body 4 includes an exterior or lower pressure surface 22 and an interior surface 24 (FIG. 2). Interior surface 24 defines an area of high or steady pressure 26 and exterior surface 22 defines an area of lower or fluctuating pressure 28.

In accordance with an example, aircraft 2 includes an energy harvesting member 40 mounted to body 4. In the exemplary aspect shown, energy harvesting member 40 may take the form of a pressure transducer 46 mounted to exterior surface 22. Pressure transducer 46 is electrically coupled to an energy storage device 50 which may take the form of an ultracapacitor 52. Energy storage device 50 may be electrically coupled to an electrical load 54 which may take the form of a light 56, such as an LED. Of course it should be understood that one or more electrical control devices, such as a switch (not shown), may be electrically connected between energy harvesting member 40 and electrical storage device 50; and between electrical storage device 50 and electrical load 54.

The aircraft 2 experiences variations in pressure between high pressure zone 26 and low pressure zone 28 during various points of flight. Pressure changes occur during changes in altitude both on ascent and decent, as well as during periods of turbulence. The pressure changes lead to pressure fluctuations that create a zone of fluctuating pressure 60 about pressure transducer 46. The pressure fluctuations act upon pressure transducer 46 resulting in generation of an electrical current that is passed to energy storage device 50. The energy may be used to power light 56. In this manner, power may be provided for an electrical load without the need for long runs of conductors that increase complexity, manufacturing costs, and an overall weight of the aircraft. The number of energy harvesting devices may vary and can be located on any surface of body 4.

Reference will now be made to FIG. 3 in describing an energy harvesting member 68. Energy harvesting member 68 may take the form of a micro-turbine 70 provided in body 4 between exterior surface 22 and interior surface 24. Micro-turbine 70 responds to flows of air currents by creating electrical energy. Micro-turbine 70 is operatively connected to an energy storage device 72 which may take the form of a battery 74. Energy storage device 72 is electrically coupled to an electrical load 76 that may be a speaker or a Wi-Fi connection 78.

During flight, and in particular during altitude changes, air is expressed from high pressure zone 26 to low pressure zone 28. At least a portion of the air is passed through one or more micro-turbines 70 to generate electrical energy for operating electrical load 76. In this manner, power may be provided for an electrical load without the need for long runs of conductors that increase complexity, manufacturing costs and an overall weight of the aircraft. The number of energy harvesting devices may vary and can be located on any surface of body 4.

Reference will now be made to FIG. 4 in describing an energy harvesting member 88. Energy harvesting member 88 takes the form of a piezo-electric element 90 that is mounted to interior surface 24. Of course it should be understood that piezo-electric element 90 may also be mounted to exterior surface 22. Piezo-electric element 90 is electrically connected to an energy storage device 92 which may take the form of a coiled spring and/or a flywheel 94. Energy storage device 92 is electrically connected to an electrical load 96 that may take the form of a sensor 98.

During flight, changes in altitude of and/or turbulence on, an aircraft 2 may result in dimensional changes to exterior surface 22 and/or interior surface 24 or other parts of body 4. The dimensional changes are realized by piezo-electric element 90. In response to the dimensional changes, piezo-electric element 90 generates a flow of electrical energy that is passed to energy storage device 92 and used to power electrical load 96. In this manner, power may be provided for an electrical load without the need for long runs of conductors that increase complexity, manufacturing costs, and an overall weight of the aircraft. The number of energy harvesting devices may vary and can be located on any surface of body 4.

At this point it should be understood that the examples describe a system for harvesting electrical energy from an aircraft resulting from changes in altitude and/or turbulence. Harvested electrical energy is passed to a local energy storage device and used to power electrical loads. In this manner, long runs of electrical cables that carry electrical energy from a central electrical source to loads may be reduced. The reduction in cabling leads to increased operational capacity and efficiencies of the aircraft. It should also be understood that the number and type of energy harvesting members may vary. Also, an aircraft may include various types of energy harvesting members. In addition, the number and type of electrical storage devices and electrical loads may vary, and some loads or storage devices may be located in low pressure zone 28 attached to exterior surface 22.

While the invention has been described with reference to an examples or examples, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof.

## Claims

1. An aircraft (2) comprising:
a body (4) with an exterior surface (22) and an interior surface (22); and
an energy harvesting system comprising:
an energy storage device (50; 72; 92); and
an energy harvesting member (40) electrically connected to the energy storage device (50; 72; 92) and mechanically linked to the aircraft (2),
wherein in that the energy harvesting member (40) is configured and disposed to generate an electrical energy output in response to a change in altitude of the aircraft (2); and **characterized in that** the energy harvesting member (40) comprises a micro-turbine (70), which is disposed between the exterior surface (22) and the adjacent interior surface (24) of the body and which is configured for generating electrical energy in response to air passing between the interior surface (24) and the exterior surface (22) of the aircraft (2) in response to the change in altitude.

2. The aircraft (2) according to claim 1, wherein the energy storage device (50; 72; 92) comprises one of an ultracapacitor (52), a battery (74), a coiled spring, and a flywheel (94).

3. The aircraft (2) according to claim 1 or 2, further comprising: an electrical load (54) operatively connected to the energy storage device (50; 72; 92).

4. A method of harvesting electrical energy in an aircraft (2) comprising:
exposing a micro-turbine (70) of an energy harvesting member (40), which is disposed between an exterior surface (22) and an adjacent interior surface (24) of a body (4) of the aircraft (2), to air passing between the interior surface (24) and the exterior surface (22) in response to a change in altitude for driving the micro-turbine (70);
generating an electrical energy in the energy harvesting member (40); passing the electrical energy from the energy harvesting member (40) to an electrical storage device (50; 72; 92); and
storing the electrical energy in the electrical storage device (50; 72; 92).

5. The method of claim 4, wherein passing the electrical energy to an energy storage device (50; 72; 92) comprises passing the electrical energy to one of an ultracapacitor (52), a battery (74), a spring and a flywheel (94).

6. The method of any of claims 4 or 5, further comprising: passing the electrical energy to an electrical load (54).

## Patentansprüche

1. Luftfahrzeug (2), umfassend:
einen Körper (4) mit einer Außenfläche (22) und einer Innenfläche (22); und
ein Energie-Harvesting-System, umfassend:
eine Energiespeichervorrichtung (50; 72; 92); und
ein Energie-Harvesting-Element (40), das elektrisch mit der Energiespeichervorrichtung (50; 72; 92) verbunden ist und mechanisch mit dem Luftfahrzeug (2) verbunden ist,
wobei, dass das Energie-Harvesting-Element (40) dazu konfiguriert und angeordnet ist, eine Ausgabe elektrischer Energie in Reaktion auf eine Höhenänderung des Luftfahrzeugs (2) zu erzeugen; und
**dadurch gekennzeichnet, dass**
das Energie-Harvesting-Element (40) eine Mikroturbine (70) umfasst, die zwischen der Außenfläche (22) und der benachbarten Innenfläche (24) des Körpers angeordnet ist und dazu konfiguriert ist, elektrische Energie in Reaktion darauf zu erzeugen, dass in Reaktion auf die Höhenänderung Luft zwischen der Innenfläche (24) und der Außenfläche (22) des Luftfahrzeugs (2) hindurchtritt.

2. Luftfahrzeug (2) nach Anspruch 1, wobei die Energiespeichervorrichtung (50; 72; 92) eins von einem Ultrakondensator (52), einer Batterie (74), einer Spiralfeder und einem Schwungrad (94) umfasst.

3. Luftfahrzeug (2) nach Anspruch 1 oder 2, ferner umfassend: eine elektrische Last (54), die in Wirkbeziehung mit der Energiespeichervorrichtung (50; 72; 92) verbunden ist.

4. Verfahren zum Gewinnen von elektrischer Energie in einem Luftfahrzeug (2), umfassend:
Aussetzen einer Mikroturbine (70) eines EnergieHarvesting-Elements (40), das zwischen einer Außenfläche (22) und einer benachbarten Innenfläche (24) eines Körpers (4) des Luftfahrzeugs (2) angeordnet ist, gegenüber Luft, die in Reaktion auf eine Höhenänderung zwischen der Innenfläche (24) und der Außenfläche (22) des Luftfahrzeugs (2) hindurchtritt, um die Mikroturbine (70) anzutreiben;
Erzeugen einer elektrischen Energie in dem Energie-Harvesting-Element (40);
Leiten der elektrischen Energie von dem Energie-Harvesting-Element (40) an eine elektrische Speichervorrichtung (50; 72; 92); und
Speichern der elektrischen Energie in der elektrischen Speichervorrichtung (50; 72; 92).

5. Verfahren nach Anspruch 4, wobei das Leiten der elektrischen Energie an eine elektrische Speichervorrichtung (50; 72; 92) das Leiten der elektrischen Energie an einen von einem Ultrakondensator (52), einer Batterie (74), einer Feder und einem Schwungrad (94) umfasst.

6. Verfahren nach einem der Ansprüche 4 oder 5, ferner umfassend: Leiten der elektrischen Energie an eine elektrische Last (54).

## Revendications

1. Aéronef (2) comprenant :
un fuselage (4) présentant une surface extérieure (22) et une surface intérieure (22) ; et
un système de récupération d'énergie comprenant :
un dispositif de stockage d'énergie (50 ; 72 ; 92) ; et
un élément de récupération d'énergie (40) électriquement connecté au dispositif de stockage d'énergie (50 ; 72 ; 92) et mécaniquement relié à l'aéronef (2),
dans lequel l'élément de récupération d'énergie (40) est configuré et disposé pour générer une sortie d'énergie électrique en réponse à un changement d'altitude de l'aéronef (2) ; et
**caractérisé en ce que**
l'élément de récupération d'énergie (40) comprend une micro-turbine (70), qui est disposée entre la surface extérieure (22) et la surface intérieure adjacente (24) du corps et qui est configurée pour générer une énergie électrique en réponse au passage d'air entre la surface intérieure (24) et la surface extérieure (22) de l'aéronef (2) en réponse au changement d'altitude.

2. Aéronef (2) selon la revendication 1, dans lequel le dispositif de stockage d'énergie (50 ; 72 ; 92) comprend un élément parmi un ultracondensateur (52), une batterie (74), un ressort enroulé et un volant (94).

3. Aéronef (2) selon la revendication 1 ou 2, comprenant en outre : une charge électrique (54) fonctionnellement connectée au dispositif de stockage d'énergie (50 ; 72 ; 92).

4. Procédé de récupération d'énergie électrique dans un aéronef (2) comprenant :
l'exposition d'une micro-turbine (70) d'un élément de récupération d'énergie (40), qui est disposée entre une surface extérieure (22) et une surface intérieure adjacente (24) d'un fuselage (4) de l'aéronef (2), au passage d'air entre la surface intérieure (24) et la surface extérieure (22) en réponse à un changement d'altitude pour entraîner la micro-turbine (70) ;
la génération d'une énergie électrique dans l'élément de récupération d'énergie (40) ;
le passage de l'énergie électrique de l'élément de récupération d'énergie (40) à un dispositif de stockage électrique (50 ; 72 ; 92) ; et
le stockage de l'énergie électrique dans le dispositif de stockage électrique (50 ; 72 ; 92).

5. Procédé selon la revendication 4, dans lequel le passage de l'énergie électrique à un dispositif de stockage d'énergie (50 ; 72 ; 92) comprend le passage de l'énergie électrique à un élément parmi un ultracondensateur (2), une batterie (74), un ressort et un volant (94).

6. Procédé selon l'une quelconque des revendications 4 ou 5, comprenant en outre : le passage de l'énergie électrique à une charge électrique (54).
